# EUROPEAN PATENT SPECIFICATION

(11) **EP 1 627 930 B1**
(45) Date of publication and mention of the grant of the patent: **15.08.2007**
(21) Application number: 05254716.3
(22) Date of filing: 28.07.2005
(51) Int. Cl.: C22C 19/05

(54) **Stable, high-temperature nickel-base superalloy and single-crystal articles utilizing the superalloy**
Hitzebeständige Superlegierung auf Nickelbasis und einkristalline Gegenstände aus dieser Legierung
Superalliage à base de nickel et articles monocrystallins fabriqués en cette alliage

(30) Priority: 20.08.2004 US 922510
(43) Date of publication of application: 22.02.2006
(73) Proprietor: GENERAL ELECTRIC COMPANY, Schenectady, NY 12345 (US)
(72) Inventor: Darolia, Ramgopal, West Chester, OH 45069 (US); O'Hara, Kevin Swayne, Boxford, MA 01921 (US); Walston, William Scott, Cincinnati OH 45241 (US); Govern, Christine, Cincinnati OH 45242 (US)
(74) Representative: Pedder, James Cuthbert

(56) References cited:
- EP-A- 1 055 741
- US-A1- 2003 041 930

## Description

This invention relates to a nickel-base superalloy such as that used in aircraft gas turbine engines, and in particular to a single-crystal nickel-base superalloy such as that used in gas turbine blades and vanes.

In an aircraft gas turbine (jet) engine, air is drawn into the front of the engine, compressed by a shaft-mounted compressor, and mixed with fuel. The mixture is combusted, and the resulting hot combustion gases are passed through a turbine mounted on the same shaft. The flow of hot combustion gas turns the turbine by contacting an airfoil portion of the turbine blade, which turns the shaft and provides power to the compressor. The hot exhaust gases flow from the back of the engine, driving it and the aircraft forward. There may additionally be a bypass fan that forces air around the center core of the engine, driven by a shaft extending from the turbine section.

The higher the temperature of the hot combustion gas, the greater the efficiency of the engine. There is therefore an incentive to operate the materials of the engine at ever-higher temperatures and loadings. A variety of techniques and structures have been used to achieve higher temperatures, including, for example, improved alloy compositions, oriented and single crystal turbine blades, thermal barrier coatings that provide environmental protection and act as insulation applied to the turbine blades, and physical cooling techniques. Nickel-based superalloys are widely used as the materials of construction of gas turbine blades and vanes.

Advanced nickel-base superalloys include substantial amounts of refractory alloying elements, such as rhenium, tungsten, tantalum, and molybdenum, that inhibit atomic diffusion of other elements and consequently improve the high-temperature mechanical properties such as creep. The presence of the large amounts of refractory alloying elements may also lead to various types of microstructural instabilities in the articles made from the superalloys. One such microstructural instability is the formation of topologically close-packed (TCP) phases after prolonged exposure of the superalloy to temperatures above about 982°C (1800°F). TCP phases are brittle and also cause partitioning of solid-solution-strengthening elements to the TCP phases, resulting in a loss of high-temperature strength.

EP 1 055 741 discloses a superalloy article with a protective layer thereon, either in the form of an environmental coating or a bond coat for a thermal barrier coating system. The protective layer has a high content of hafnium and/or zirconium, to improve the adherence and properties of the layer.

There is a need for an approach that allows the refractory elements to be present to perform their function of reducing diffusion of other elements and improving elevated temperature mechanical properties, while reducing or ideally avoiding instabilities such as TCP phase formation, and while retaining or improving high-temperature mechanical properties. The present invention fulfills this need, and further provides related advantages.

The present invention provides a nickel-base superalloy with high levels of refractory metals but reduced tendency toward microstructural instability. High-temperature mechanical properties are also improved. Castability and heat treatability are not sacrificed in the nickel-base superalloy.

Aspects of the present invention are defined in the accompanying claims.

A composition of matter consists essentially of, in weight percent, from about 0.4 to about 6.5 percent ruthenium, from about 3 to about 8 percent rhenium, from about 5.8 to about 10.7 percent tantalum, from about 4.25 to about 17.0 percent cobalt, from 0.1 to about 2.0 percent hafnium, from about 0.02 to about 0.4 percent carbon, from about 0.001 to about 0.005 percent boron, from 0 to about 0.02 percent yttrium, from about 1 to about 4 percent molybdenum, from about 1.25 to about 10 percent chromium, from about 0.5 to about 2.0 percent niobium, from about 0.05 to about 0.5 percent zirconium, from about 5.0 to about 6.6 percent aluminum, from 0 to about 2.0 percent titanium, from about 3.0 to about 7.5 percent tungsten, and from about 0.1 to about 6 percent of an element selected from the group consisting of platinum, iridium, rhodium, and palladium, and combinations thereof. The balance of the composition of matter is nickel and incidental impurities.

A preferred composition of matter within this broad range has a nominal composition, in weight percent, of about 3 percent ruthenium, about 5.5 percent rhenium, about 8.25 percent tantalum, about 16.5 percent cobalt, from 0.5 to about 2.0 percent hafnium, about 0.03 percent carbon, about 0.004 percent boron, about 0.01 percent yttrium, about 2.0 percent molybdenum, about 2 percent chromium, from about 1 to about 2 percent niobium, from about 0.1 to about 0.5 percent zirconium, about 5.5 percent aluminum, from 0 to about 2.0 percent titanium, about 6 percent tungsten and the balance nickel and incidental impurities. It is preferred that this composition has from about 0.5 to about 2.0 percent of the element selected from the group consisting of platinum, iridium, rhodium, and palladium, and combinations thereof.

An article of an embodiment of the present invention comprises a substantially single crystal piece having a composition as set forth above and elsewhere herein. The single crystal piece is desirably substantially free of TCP phase. The article may be a component of a gas turbine engine such as a gas turbine blade or a gas turbine vane. In some applications, there may be a protective coating overlying the substantially single-crystal piece, such as an aluminide protective coating and optionally a ceramic thermal barrier coating.

The present approach achieves mechanical properties in the superalloy that equal or exceed those of conventional superalloys, while minimizing, delaying, or, ideally, completely avoiding the formation of microstructural instabilities such as TCP phases. The presence of an elevated level of iridium, rhodium, palladium, and/or platinum improves mechanical properties. The hafnium and zirconium contribute to improved strength and environmental resistance, both in the case of an uncoated article as well as a coated article with an aluminide protective coating. Good castability and heat treatability are retained.

The invention will now be described in greater detail, by way of example, with reference to the drawings, in which:-
Figure 1 is a perspective view of a turbine blade; and
Figure 2 is a sectional view through the turbine blade of Figure 1, taken on line 2-2.

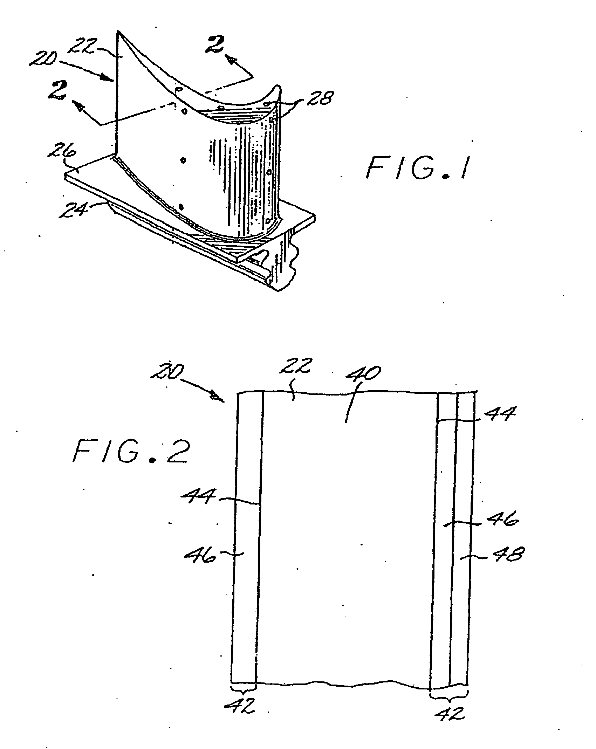

Figure 1 depicts a component article of a gas turbine engine such as a turbine blade or turbine vane, and in this illustration a turbine blade 20. The turbine blade 20 includes an airfoil 22 against which the flow of hot exhaust gas is directed. (The turbine vane has a similar appearance in respect to the pertinent airfoil portion.) At least the airfoil 22, and preferably the entire turbine blade 20, is substantially single crystal. That is, there are substantially no grain boundaries in the single crystal portion, and the crystallographic orientation is the same throughout. The term substantially single crystal" means that virtually the entire article, preferably at least 90 percent of its volume, is a single crystal, although there may be some incidental small regions having other crystalline orientations present. Even a substantially single crystal article typically has a number of low-angle grain boundaries present, and these are permitted within the scope of the term "substantially single crystal" as is known in the art.

The article must be substantially a single crystal (i.e., single grain). It may not be a polycrystal, either a random polycrystal or an oriented polycrystal such as produced by directional solidification. In the polycrystalline alloys, it has been conventional to add higher levels of elements that are known to strengthen grain boundaries, such as carbon, boron, hafnium, and zirconium. Zirconium and hafnium are chemically reactive, modify the morphologies of precipitate phases, and may adversely affect the heat treatment of the alloys. Because these elements are not needed to strength high-angle grain boundaries, which are not present in substantially single-crystal articles, it has therefore been the general industry practice to omit them from single-crystal articles except in very minor amounts to strengthen the low-angle grain boundaries that may be present. The present alloy departs from that approach and adds substantial amounts of hafnium and zirconium even to a substantially single-crystal alloy.

The turbine blade 20 is mounted to a turbine disk (not shown) by a dovetail 24 which extends downwardly from the airfoil 22 and engages a slot on the turbine disk. A platform 26 extends longitudinally outwardly from the area where the airfoil 22 is joined to the dovetail 24. In some articles, a number of optional cooling channels extend through the interior of the airfoil 22, ending in openings 28 in the surface of the airfoil 22. A flow of cooling air is directed through the cooling channels, to reduce the temperature of the airfoil 22.

The substantially single-crystal article is preferably manufactured by the directional solidification of a melt of the alloy composition as discussed next. Directional solidification techniques to produce substantially single-crystal pieces of other materials and compositions are known in the art, and the same techniques may be used here.

The article is formed of a nickel-base superalloy. As used herein, "nickel-base" means that the composition has more nickel present than any other element. The nickel-base superalloys are typically of a composition that is strengthened by the precipitation of gamma-prime phase or a related phase.

The article and nickel-base superalloy preferably have a composition consisting essentially of, in weight percent, from 0.4 to 6.5 percent ruthenium, from 3 to 8 percent rhenium, from 5.8 to 10.7 percent tantalum, from 4.25 to 17.0 percent cobalt, from 0.1 to 2.0 percent hafnium, from 0.02 to 0.4 percent carbon, from 0.001 to 0.005 percent boron, from 0 to 0.02 percent yttrium, from 1 to 4 percent molybdenum, from 1.25 to 10 percent chromium, from 0.5 to 2.0 percent niobium, from 0.05 to 0.5 percent zirconium, from 5.0 to 6.6 percent aluminum, from 0 to 2.0 percent titanium, from 3.0 to 7.5 percent tungsten, and from 0.1 to 6 percent of an element selected from the group consisting of platinum, iridium, rhodium, and palladium, and combinations thereof. The balance of the composition is nickel and incidental impurities.

More preferably, within this broad range the article has specific elemental limitations, in weight percent, of 3 percent ruthenium, 5.5 percent rhenium, 8.25 percent tantalum, 16.5 percent cobalt, from 0.5 to 2.0 percent hafnium, 0.03 percent carbon, 0.004 percent boron, 0.01 percent yttrium, 2.0 percent molybdenum, 2 percent chromium, from 1 to 2 percent niobium, from 0.1 to 0.5 percent zirconium, 5.5 percent aluminum, from 0 to 2.0 percent titanium, 6 percent tungsten and the balance nickel and incidental impurities. It is preferred that this composition has from 0.5 to 2.0 percent of the element selected from the group consisting of platinum, iridium, rhodium, and palladium, and combinations thereof.

The amount of ruthenium may not be below about 0.4 percent by weight because smaller amounts of ruthenium would not effectively stabilize the microstructure against detrimental TCP formation. The amount of ruthenium may not be above about 8 percent by weight because the stability benefits of larger amounts of ruthenium do not outweigh the cost and density increases to the alloy.

The amount of rhenium may not be below about 3 percent by weight because smaller amounts would not provide sufficient creep rupture strength through solid solution strengthening. The amount of rhenium may not be above about 8 percent by weight because larger amounts lead to microstructural instability, increased cost, and increased density of the material.

The amount of tantalum may not be below about 5.8 percent by weight because smaller amounts would not provide sufficient creep rupture strength through precipitation strengthening. The amount of tantalum may not be above about 10.7 percent by weight because the strength benefits above this level do not outweigh the cost and density increases to the alloy.

The amount of cobalt may not be below about 4.25 percent by weight because smaller amounts would not effectively act to stabilize the microstructure against detrimental TCP formation. The amount of cobalt may not be above about 17.0 percent by weight because larger amounts are detrimental to high-temperature strength by reducing the temperature of the gamma prime solvus.

The amount of hafnium may not be below about 0.1 percent by weight because lower amounts would not provide sufficient low angle grain boundary strengthening, precipitation strengthening, and environmental resistance. The amount of hafnium may not be above about 2.0 percent by weight because larger amounts cause difficulty in properly heat treating the alloy to obtain the optimum strength.

The amount of carbon may not be below about 0.02 percent by weight because smaller amounts would not effectively serve to clean the alloy melt of detrimental inclusions. The amount of carbon may not be above about 0.4 percent by weight because larger amounts cause excessive carbide formation that may reduce fatigue properties.

The amount of boron may not be below about 0.001 percent by weight because smaller amounts would not provide sufficient low-angle grain boundary strength.

The amount of boron may not be above about 0.006 percent by weight because larger amounts cause excessive incipient melting.

The amount of yttrium may not be above 0.02 percent by weight because larger amounts cause excessive incipient melting.

The amount of molybdenum may not be below about 1 percent by weight because smaller amounts do not provide sufficient creep rupture strength through solid solution strengthening. The amount of molybdenum may not be above 4 percent by weight because larger amounts degrade environmental resistance.

The amount of chromium may not be below about 1.25 percent by weight because smaller amounts would not provide sufficient environmental resistance. The amount of chromium may not be above about 10 percent by weight because larger amounts cause microstructural instability.

The amount of niobium may not be below about 0.5 percent by weight because smaller amounts would not provide sufficient creep rupture strength through precipitation strengthening. The amount of niobium may not be above about 2 percent by weight because larger amounts degrade environmental resistance

The amount of zirconium may not be below about 0.05 percent by weight because smaller amounts do not provide sufficient low-angle grain-boundary strengthening, precipitation hardening, and environmental resistance. The amount of zirconium may not be above about 0.5 percent by weight because larger amounts cause excessive incipient melting.

The amount of aluminum may not be below about 5.0 percent by weight because smaller amounts do not provide sufficient environmental resistance. The amount of aluminum may not be above 6.6 percent by weight because larger amounts cause microstructural instability.

The amount of titanium may not be above about 2.0 percent by weight because larger amounts degrade environmental resistance.

The amount of tungsten may not be below about 3.0 percent by weight because smaller amounts do not provide sufficient creep rupture strength through solid solution strengthening. The amount of tungsten may not be above about 7.5 percent by weight because larger amounts cause microstructural instability.

The amount of platinum, iridium, rhodium, or palladium, or combinations thereof, may not be less than about 0.1 percent by weight because smaller amounts do not provide sufficient creep strength. The amount of platinum, iridium, rhodium, or palladium, or combinations thereof, may not be greater than about 6 percent by weight because the strength benefits of larger amounts do not outweigh the cost and density increase to the alloy.

Figure 2 is a sectional view through the airfoil 22 of the turbine blade 20. In the sectional view, the body of the airfoil 22 is made of the nickel-base superalloy discussed above. The body is substantially a single-crystal piece 40, which is preferably substantially free of TCP phases, both as fabricated and after exposure for extended times at elevated temperatures, such as exposure for more than 400 hours at a temperature above about 982°C (1800°F).

The single-crystal piece 40 may be used with bare surfaces. However, at the elevated service temperatures in a combustion gas environment, the bare surfaces are rapidly oxidized with significant metal loss. Optionally but preferably, a protective coating 42 is applied overlying the surfaces 44 of the substantially single-crystal piece 40. The protective coating 42 reduces oxidation and hot-gas damage to the surfaces 44. Figure 2 shows two embodiments of the optional protective coating 42. In one, the protective coating 42 includes only an environmental coating 46 contacting the surface 44, such as a diffusional or overlay aluminum-containing coating of the types disclosed in US Patent 6,607,611. In the other, the protective coating 42 includes the environmental coating 46 contacting the surface 44, and additionally a thermal barrier coating 48 of a ceramic material such as yttria-stabilized zirconia overlying and contacting the environmental coating 46. The thermal barrier coating 48 and its deposition are also described in US Patent 6,607,611.

## Claims

1. A composition of matter consisting of, in weight percent, from 0.4 to 6.5 percent ruthenium, from 3 to 8 percent rhenium, from 5.8 to 10.7 percent tantalum, from 4.25 to 17.0 percent cobalt, from 0.1 to 2.0 percent hafnium, from 0.02 to 0.4 percent carbon, from 0.001 to 0.005 percent boron, from 0 to 0.02 percent yttrium, from 1 to 4 percent molybdenum, from about 1.25 to 10 percent chromium, from 0.5 to 2.0 percent niobium, from 0.05 to 0.5 percent zirconium, from 5.0 to 6.6 percent aluminum, from 0 to 2.0 percent titanium, from 3.0 to 7.5 percent tungsten, and from 0.1 to 6 percent of an element selected from the group consisting of platinum, iridium, rhodium, and palladium, and combinations thereof, balance nickel and incidental impurities.

2. The composition of matter of claim 1, wherein the composition has a nominal composition, in weight percent, of 3 percent ruthenium, 5.5 percent rhenium, 8.25 percent tantalum, 16.5 percent cobalt, from 0.5 to 2.0 percent hafnium, 0.03 percent carbon, 0.004 percent boron, 0.01 percent yttrium, 2.0 percent molybdenum, 2 percent chromium, from 1 to 2 percent niobium, from 0.1 to 0.5 percent zirconium, 5.5 percent aluminum, from 0 to 2.0 percent titanium, 6 percent tungsten, and from 0.5 to 2.0 percent of the element selected from the group consisting of platinum, iridium, rhodium, and palladium, and combinations thereof.

3. The composition of matter of claim 1, wherein the composition has from 0.5 to 2.0 percent of the element selected from the group consisting of platinum, iridium, rhodium, and palladium, and combinations thereof.

4. An article comprising a substantially single crystal piece (40) having a composition consisting of, in weight percent, from 0.4 to 6.5 percent ruthenium, from 3 to 8 percent rhenium, from 5.8 to 10.7 percent tantalum, from 4.25 to 17.0 percent cobalt, from 0.1 to 2.0 percent hafnium, from 0.02 to 0.4 percent carbon, from 0.001 to 0.005 percent boron, from 0 to 0.02 percent yttrium, from 1 to 4 percent molybdenum, from 1.25 to 10 percent chromium, from 0.5 to 2.0 percent niobium, from 0.05 to 0.5 percent zirconium, from 5.0 to 6.6 percent aluminum, from 0 to 2.0 percent titanium, from 3.0 to 7.5 percent tungsten, and from 0.1 to 6 percent of an element selected from the group consisting of platinum, iridium, rhodium, and palladium, and combinations thereof, balance nickel and incidental impurities.

5. The article of claim 4, wherein the single crystal piece (40) is substantially free of TCP phase.

6. The article of claim 4, wherein the article has a nominal composition, in weight percent, of 3 percent ruthenium, 5.5 percent rhenium, 8.25 percent tantalum, 16.5 percent cobalt, from 0.5 to 2.0 percent hafnium, 0.03 percent carbon, 0.004 percent boron, 0.01 percent yttrium, 2.0 percent molybdenum, 2 percent chromium, from 1 to 2 percent niobium, from 0.1 to 0.5 percent zirconium, 5.5 percent aluminum, from 0 to 2.0 percent titanium, 6 percent tungsten, and from 0.5 to 2.0 percent of the element selected from the group consisting of platinum, iridium, rhodium, and palladium, and combinations thereof.

7. The article of claim 4, wherein the article has a nominal composition including from 0.5 to 2.0 percent of the element selected from the group consisting of platinum, iridium, rhodium, and palladium, and combinations thereof.

8. The article of claim 4, wherein the article is a component of a gas turbine engine.

9. The article of claim 4, wherein the article is a gas turbine blade (20) or a gas turbine vane.

10. The article of claim 4, further including a protective coating overlying the substantially single-crystal piece (40).

## Patentansprüche

1. Zusammensetzung bestehend aus, in Gew.-%, von 0,4 bis 6,5 Prozent Ruthenium, von 3 bis 8 Prozent Rhenium, von 5,8 bis 10,7 Prozent Tantal, von 4,25 bis 17,0 Prozent Kobalt, von 0,1 bis 2,0 Prozent Hafnium, von 0,02 bis 0,4 Prozent Kohlenstoff, von 0,001 bis 0,005 Prozent Bor, von 0 bis 0,02 Prozent Yttrium, von 1 bis 4 Prozent Molybdän, von etwa 1,25 bis 10 Prozent Chrom, von 0,5 bis 2,0 Prozent Niob, von 0,05 bis 0,5 Prozent Zirkonium, von 5,0 bis 6,6 Prozent Aluminium, von 0 bis 2,0 Prozent Titan, von 3,0 bis 7,5 Prozent Wolfram und von 0,1 bis 6 Prozent eines Elementes ausgewählt aus der Gruppe bestehend aus Platin, Iridium, Rhodium und Palladium und Kombinationen davon, wobei der Rest Nickel und übliche Verunreinigungen sind.

2. Zusammenstzung nach Anspruch 1, worin die Zusammensetzung eine Nominalzusammensetzung, in Gew.-%, hat von 3 Prozent Ruthenium, 5,5 Prozent Rhenium, 8,25 Prozent Tantal, 16,5 Prozent Kobalt, von 0,5 bis 2,0 Prozent Hafnium, 0,03 Prozent Kohlenstoff, 0,004 Prozent Bor, 0,01 Prozent Yttrium, 2,0 Prozent Molybdän, 2 Prozent Chrom, von 1 bis 2 Prozent Niob, von 0,1 bis 0,5 Prozent Zirkonium, 5,5 Prozent Aluminium, von 0 bis 2,0 Prozent Titan, 6 Prozent Wolfram und von 0,5 bis 2 Prozent des Elementes ausgewählt aus der Gruppe bestehend aus Platin, Iridium, Rhodium und Palladium und Kombinationen davon.

3. Zusammensetzung nach Anspruch 1, worin die Zusammensetzungung von 0,5 bis 2 Prozent des Elementes ausgewählt aus der Gruppe bestehend aus Platin, Iridium, Rhodium und Palladium und Kombinationen davon aufweist.

4. Gegenstand umfassend ein im wesentlichen einkristallines Stück (40) mit einer Zusammensetzung bestehend aus, in Gew.-%, von 0,4 bis 6,5 Prozent Ruthenium, von 3 bis 8 Prozent Rhenium, von 5,8 bis 10,7 Prozent Tantal, von 4,25 bis 17,0 Prozent Kobalt, von 0,1 bis 2,0 Prozent Hafnium, von 0,02 bis 0,4 Prozent Kohlenstoff, von 0,001 bis 0,005 Prozent Bor, von 0 bis 0,02 Prozent Yttrium, von 1 bis 4 Prozent Molybdän, von etwa 1,25 bis 10 Prozent Chrom, von 0,5 bis 2,0 Prozent Niob, von 0,05 bis 0,5 Prozent Zirkonium, von 5,0 bis 6,6 Prozent Aluminium, von 0 bis 2,0 Prozent Titan, von 3,0 bis 7,5 Prozent Wolfram und von 0,1 bis 6 Prozent eines Elementes ausgewählt aus der Gruppe bestehend aus Platin, Iridium, Rhodium und Palladium und Kombinationen davon, Rest sind Nickel und übliche Verunreinigungen.

5. Gegenstand nach Anspruch 4, worin das einkristalline Stück (40) im wesentlichen frei von TCP-Phase ist.

6. Gegenstand nach Anspruch 4, worin der Gegenstand eine Nominalzusammensetzung, in Gew.-%, hat von 3 Prozent Ruthenium, 5,5 Prozent Rhenium, 8,25 Prozent Tantal, 16,5 Prozent Kobalt, von 0,5 bis 2,0 Prozent Hafnium, 0,03 Prozent Kohlenstoff, 0,004 Prozent Bor, 0,01 Prozent Yttrium, 2,0 Prozent Molybdän, 2 Prozent Chrom, von 1 bis 2 Prozent Niob, von 0,1 bis 0,5 Prozent Zirkonium, 5,5 Prozent Aluminium, von 0 bis 2,0 Prozent Titan, 6 Prozent Wolfram und von 0,5 bis 2 Prozent des Elementes ausgewählt aus der Gruppe bestehend aus Platin, Iridium, Rhodium und Palladium und Kombinationen davon.

7. Gegenstand nach Anspruch 4, worin der Gegenstand eine Nominalzusammensetzung einschliesslich von 0,5 bis 2 Prozent des Elementes ausgewählt aus der Gruppe bestehend aus Platin, Iridium, Rhodium und Palladium und Kombinationen davon aufweist.

8. Gegenstand nach Anspruch 4, worin der Gegenstand eine Komponente eines Gasturbinentriebwerkes ist.

9. Gegenstand nach Anspruch 4, worin der Gegenstand eine Gasturbinen-Laufschaufel (20) oder eine Gasturbinen-Leitschaufel ist.

10. Gegenstand nach Anspruch 4, weiter einschliessend einen Schutzüberzug, der über dem im wesentlichen einkristallinen Stück (40) liegt.

## Revendications

1. Composition de matière constitué par, en pour-cent en poids, de 0,4 à 6,5 pour-cent de ruthénium, de 3 à 8 pour-cent de rhénium, de 5,8 à 10,7 pour-cent de tantale, de 4,25 à 17,0 pour-cent de cobalt, de 0,1 à 2,0 pour-cent de hafnium, de 0,02 à 0,4 pour-cent de carbone, de 0,001 à 0,005 pour-cent de bore, de 0 à 0,02 pour-cent d'yttrium, de 1 à 4 pour-cent de molybdène, de 1,25 à 10 pour-cent environ de chrome, de 0,5 à 2,0 pour-cent de niobium, de 0,05 à 0,5 pour-cent de zirconium, de 5,0 à 6,6 pour-cent de aluminium, de 0 à 2,0 pour-cent de titane, de 3,0 à 7,5 pour-cent de tungstène, et de 0,1 à 6 pour-cent d'un élément sélectionné à partir du groupe constitué par le platine, l'iridium, le rhodium et le palladium, et leurs mélanges, le complément de nickel et impuretés éventuelles.

2. Composition de matière selon la revendication 1, dans laquelle la composition présente une composition nominale, en pour-cent en poids, de 3 pour-cent de ruthénium, 5,5 pour-cent de rhénium, 8,25 pour-cent de tantale, 16,5 pour-cent de cobalt, de 0,5 à 2,0 pour-cent de hafnium, 0,03 pour-cent de carbone, 0,004 pour-cent de bore, 0,01 pour-cent d'yttrium, 2,0 pour-cent de molybdène, 2 pour-cent de chrome, de 1 à 2 pour-cent de niobium, de 0,1 à 0,5 pour-cent de zirconium, 5,5 pour-cent de aluminium, de 0 à 2,0 pour-cent de titane, 6 pour-cent de tungstène, et de 0,5 à 2,0 pour-cent de l'élément sélectionné à partir du groupe constitué par le platine, l'iridium, le rhodium et le palladium, et leurs mélanges.

3. Composition de matière selon la revendication 1, dans laquelle la composition comporte de 0,5 à 2,0 pour-cent de l'élément sélectionné à partir du groupe constitué par le platine, l'iridium, le rhodium et le palladium, et leurs mélanges.

4. Article comprenant un pièce sensiblement monocristalline (40) présentant une composition constitué par, en pour-cent en poids, de 0,4 à 6,5 pour-cent de ruthénium, de 3 à 8 pour-cent de rhénium, de 5,8 à 10,7 pour-cent de tantale, de 4,25 à 17,0 pour-cent de cobalt, de 0,1 à 2,0 pour-cent de hafnium, de 0,02 à 0,4 pour-cent de carbone, de 0,001 à 0,005 pour-cent de bore, de 0 à 0,02 pour-cent d'yttrium, de 1 à 4 pour-cent de molybdène, de 1,25 à 10 pour-cent de chrome, de 0,5 à 2,0 pour-cent de niobium, de 0,05 à 0,5 pour-cent de zirconium, de 5,0 à 6,6 pour-cent de aluminium, de 0 à 2,0 pour-cent de titane, de 3,0 à 7,5 pour-cent de tungstène, et de 0,1 à 6 pour-cent d'un élément sélectionné à partir du groupe constitué par le platine, l'iridium, le rhodium, et le palladium, et leurs mélanges, le complément de nickel et impuretés éventuelles.

5. Article selon la revendication 4, dans lequel la pièce monocristalline (40) est sensiblement exempte de phase TCP.

6. Article selon la revendication 4, dans lequel l'article présente une composition nominale, en pour-cent en poids, de 3 pour-cent de ruthénium, 5,5 pour-cent de rhénium, 8,25 pour-cent de tantale, 16,5 pour-cent de cobalt, de 0,5 à 2,0 pour-cent de hafnium, 0,03 pour-cent de carbone, 0,004 pour-cent de bore, 0,01 pour-cent d'yttrium, 2,0 pour-cent de molybdène, 2 pour-cent de chrome, de 1 à 2 pour-cent de niobium, de 0,1 à 0,5 pour-cent de zirconium, 5,5 pour-cent de aluminium, de 0 à 2,0 pour-cent de titane, 6 pour-cent de tungstène, et de 0,5 à 2,0 pour-cent de l'élément sélectionné à partir du groupe constitué par le platine, l'iridium, le rhodium, et le palladium, et leurs mélanges.

7. Article selon la revendication 4, dans lequel l'article présente une composition nominale comportant de 0,5 à 2,0 pour-cent de l'élément sélectionné à partir du groupe constitué par le platine, l'iridium, le rhodium, et le palladium, et leurs mélanges.

8. Article selon la revendication 4, dans lequel l'article est un composant d'un turbomoteur à gaz.

9. Article selon la revendication 4, dans lequel l'article est une ailette de turbine à gaz (20) ou une aube de turbine à gaz.

10. Article selon la revendication 4, comportant, en outre, un revêtement de protection recouvrant la pièce sensiblement monocristalline (40).
